# EUROPEAN PATENT APPLICATION

(11) **EP 2 505 559 A1**
(43) Date of publication of application: **03.10.2012**
(21) Application number: 10833069.7
(22) Date of filing: 09.11.2010
(51) Int. Cl.: C02F 1/44, B01D 61/26, B01D 61/28, B01D 61/46, B01D 61/48, C02F 1/04, C02F 1/469, G21F 9/06

(54) **DEVICE AND METHOD FOR TREATING NITROGEN COMPOUND-CONTAINING ACIDIC SOLUTIONS**

(30) Priority: 25.11.2009 JP 2009267692
(71) Applicant: Kurita Water Industries Ltd., Shinjuku-ku, Tokyo 160-8383 (JP)
(72) Inventor: KOMORI, Hideyuki, Tokyo 160-8383 (JP); ORITA, Nobuhiro, Tokyo 160-8383 (JP)
(74) Representative: HOFFMANN EITLE
(86) International application number: PCT/JP2010/069932
(87) International publication number: WO 2011/065222

(57) **Abstract**

A nitrogen compound-containing acidic liquid such as a monoethanolamine-containing dilute hydrochloric acid waste liquid discharged during the regeneration of condensate demineralizers in nuclear power plants or thermal power plants is efficiently and economically treated. A neutralization dialysis device 2 is provided in which a raw water chamber 22 and an alkaline solution chamber 23 are partitioned from each other with an anion exchange membrane 21. The nitrogen compound-containing acidic liquid is passed through the raw water chamber 22, while an alkaline solution is passed through the alkaline solution chamber 23, thereby neutralizing and demineralizing the acidic liquid. Thereafter, the nitrogen compound contained in the neutralized demineralized liquid is concentrated with an electrodeionizer 4. The neutralization dialysis treatment using the anion exchange membrane 21 and the alkaline solution can neutralize and demineralize the nitrogen compound-containing acidic liquid. From the resultant neutralized demineralized liquid, the nitrogen compound can be efficiently separated and concentrated.

## Description

### Field of Invention

The present invention relates to an apparatus and a method for treating a nitrogen compound-containing acidic liquid so as to efficiently separate and concentrate the nitrogen compound. In more detail, the invention relates to an apparatus and a method for treating a nitrogen compound-containing acidic liquid such as a monoethanolamine-containing dilute hydrochloric acid waste liquid discharged during the regeneration of condensate demineralizers in nuclear power plants and thermal power plants, so as to efficiently separate and concentrate the nitrogen compound such as monoethanolamine.

### Background of Invention

In a condensation step performed during nuclear power generation or thermal power generation, amines such as monoethanolamine (MEA) are used as anticorrosives for steam generation lines. In general, such amines are captured by a cation exchange resin in a condensate demineralizer (hereinafter, sometimes referred to as "condemi") that is provided in the course of the line, and are discharged together with a regeneration waste liquid during the regeneration of the condensate demineralizer. The discharged amines increase COD, and rivers and lakes become eutrophic and contaminated. Thus, it is necessary that such amines be treated.

Conventional methods for treating monoethanolamine rely on electrolysis (for example, Patent Document 1), biological treatment, activated carbon adsorption or wet oxidation (catalytic decomposition, thermal decomposition). However, these proposed methods have problems in that the reaction rate is low and the treatment incurs very high energy costs.

According to Patent Documents 2 and 3, an amine compound is catalytically oxidized using a noble metal-supported catalyst. However, when the amine concentration is high, the catalyst degrades quickly and needs to be exchanged frequently; in addition, the cost incurred for the addition of oxidant becomes very high, thus resulting in economic disadvantages. Further, because the reaction is carried out at an elevated temperature, heating energy costs are another problem.

According to Patent Document 4, an alkanolamine-containing acidic waste liquid is directly distilled and concentrated under reduced pressure without being neutralized. However, because the corrosive properties of an acidic waste liquid are increased after the acidic waste liquid has been concentrated, an expensive anticorrosion-treated concentration apparatus is necessary. In general, most materials cannot maintain corrosion resistance when the Cl⁻ concentration in a liquid exceeds 5%. For example, ferrite stainless steel 25 Cr is usable at a Cl⁻ concentration of not more than 5% but cannot be used at a Cl⁻ concentration in excess of 5% (SOUCHI ZAIRYOU TAISHOKU HYOU (Table listing corrosion resistance of apparatus materials): published from Kagaku Kougyo Sha).

According to Patent Document 5, Cl⁻ is removed by electrodialytic treatment using an anion exchange membrane, subsequently substances excluding monoethanolamine are decomposed by wet catalytic treatment, and thereafter monoethanolamine is recovered. However, the electrodialytic treatment and the catalytic treatment incur very high costs, thus resulting in economic disadvantages. In particular, the following problem is encountered due to the fact that a condemi regeneration waste liquid contains a large amount of hydrochloric acid used for the regeneration of the ion exchange resin. That is, even when H⁺ ions and other cation components (such as monoethanolamine, ammonia and hydrazine) are present in the same equivalent weights, the relationship between their molar electrical conductivities indicates that the H⁺ ions can migrate a predominantly longer distance during electrodialysis (for example, the molar conductivity λ^{∞} in an infinitely diluted aqueous solution at 25°C is 349.8 S.cm²/mol for H⁺ and 73 . 5 S·cm²/mol for NH₄⁺). Accordingly, the electrical power consumed during the electrodialysis in the above treatment of a condemi regeneration waste liquid is predominantly used for the migration of H⁺ ions, resulting in very high energy costs. Thus, the disclosed technique is very inefficient.

According to Patent Document 6, an acid is removed and recovered from a waste acid by electrodialysis using ion exchange membranes. This technique requires membranes having a very large area, and in principle cannot be used to recover an acid at a higher concentration than the waste acid. Further, the amount of the dialysis waste liquid becomes larger than the amount of the waste acid because of the penetration of water. Furthermore, the waste acid finds its way into the dialysis waste liquid. These restrictions and defects need to be remedied.

Patent Document 7 discloses a treatment of an organic amine-containing regeneration waste liquid, in which the waste liquid is heated so as to evaporate water and the organic amine is gasified from the resultant concentrated liquid. Large amounts of thermal energy are required in order to evaporate water from the waste liquid. In addition, the evaporation results in a very high concentration of Cl⁻ ions, causing the risk that the apparatus may become corroded. In the case where water is thermally evaporated after the liquid is neutralized by the addition of an alkali, the salt concentration is increased by the addition of an alkali such as NaOH and the precipitation of a salt can increase the frequency with which maintenance is performed. List of Documents

Patent Document 1: Japanese Patent Publication 9-239371 A
Patent Document 2: Japanese Patent 3739452
Patent Document 3: Japanese Patent 3568298
Patent Document 4: Japanese Patent 3083504
Patent Document 5: Japanese Patent Publication 2005-66544 A
Patent Document 6: Japanese Patent Publication 2007-7655 A
Patent Document 7: Japanese Patent Publication 9-314128 A

As described above, no techniques have been proposed which can efficiently and economically treat a nitrogen compound-containing acidic liquid such as a monoethanolamine-containing dilute hydrochloric acid waste liquid discharged during condemi regeneration. There is a demand for such a technique to be developed.
As described hereinabove, directly electrodialyzing a nitrogen compound-containing acidic liquid is extremely difficult. Thus, a technique is desired which is performed as a pretreatment before the electrodialysis so as to neutralize a nitrogen compound-containing acidic liquid as well as to effectively remove Cl⁻ ions selectively. Further, such a technique is required to be capable of neutralizing an acidic liquid without increasing the liquid volume or the total ion amount as well as to be capable of removing Cl⁻ ions without increasing corrosive properties, namely, while preventing an increase in corrosive properties caused by concentration. Object and Summary of Invention

It is an object of the present invention to provide an apparatus and a method for efficiently and economically treating a nitrogen compound-containing acidic liquid such as a monoethanolamine-containing dilute hydrochloric acid waste liquid discharged during the condemi regeneration.

The present inventors carried out studies in order to achieve the above object. The present inventors have found that a neutralization dialysis treatment using an anion exchange membrane and an alkaline solution can neutralize and demineralize a nitrogen compound-containing acidic liquid and allows for efficient separation and concentration of the nitrogen compound from the resultant neutralized demineralized liquid.

The present invention has been achieved on the basis of the above finding. The summary of the invention is as follows.

An apparatus for treating a nitrogen compound-containing acidic liquid according to a first embodiment is an apparatus for treating an acidic liquid containing a nitrogen compound that includes a neutralization demineralization device which has a first chamber and a second chamber partitioned from each other with an anion exchange membrane and which is configured so as to neutralize and demineralize the acidic liquid by passing the acidic liquid through the first chamber and an alkaline solution through the second chamber, and a concentrator which concentrates the nitrogen compound contained in the neutralized demineralized liquid that has been neutralized and demineralized by the neutralization demineralization device.

A second embodiment is directed to the apparatus for treating a nitrogen compound-containing acidic liquid according to the first embodiment, wherein the concentrator is any of a distillation concentrator, an electrodeionizer and an electrodialyzer.

A third embodiment is directed to the apparatus for treating a nitrogen compound-containing acidic liquid according to the second embodiment, wherein the concentrator is an electrodeionizer or an electrodialyzer, and anode water that is passed through an anode chamber of the electrodeionizer or the electrodialyzer does not contain an oxidative substance or any substance that becomes oxidative by being anodically oxidized.

A fourth embodiment is directed to the apparatus for treating a nitrogen compound-containing acidic liquid according to any one of the first to third embodiments, wherein the pH of the neutralized demineralized liquid is 5 to 9.

A method for treating a nitrogen compound-containing acidic liquid according to a fifth embodiment is a method for treating an acidic liquid containing a nitrogen compound that includes a neutralization and demineralization step of neutralizing and demineralizing the acidic waste liquid by passing the acidic liquid through a first chamber partitioned from a second chamber with an anion exchange membrane while passing an alkaline solution through the second chamber, and a concentration step of concentrating the nitrogen compound contained in the neutralized demineralized liquid that has been neutralized and demineralized in the neutralization and demineralization step.

A sixth embodiment is directed to the method for treating a nitrogen compound-containing acidic liquid according to the fifth embodiment, wherein the concentration step is carried out using any of a distillation concentrator, an electrodeionizer and an electrodialyzer.

A seventh embodiment is directed to the method for treating a nitrogen compound-containing acidic liquid according to the sixth embodiment, wherein the concentration step is carried out using an electrodeionizer or an electrodialyzer, and anode water which does not contain an oxidative substance or any substance that becomes oxidative by being anodically oxidized is passed through an anode chamber of the electrodeionizer or the electrodialyzer.

An eighth embodiment is directed to the method for treating a nitrogen compound-containing acidic liquid according to any one of the fifth to seventh embodiments, wherein the pH of the neutralized demineralized liquid is 5 to 9.

### Advantageous Effects of Invention

According to the present invention, a nitrogen compound-containing acidic liquid is first neutralized and demineralized by the neutralization dialysis treatment using an alkaline solution through an anion exchange membrane. Through this treatment, the liquid is conditioned such that it can be favorably concentrated by the subsequent concentration treatment (the first and fifth embodiments).

That is, as described hereinabove, an extreme inefficiency is encountered in attempting to remove nitrogen compounds (cation components such as MEA and NH₄⁺) by directly electrodialyzing a nitrogen compound-containing acidic liquid because a major proportion of cations that migrate are H⁺ ions. According to the present invention, an acidic liquid is neutralized and dialyzed using an anion exchange membrane to such an extent that the number of H⁺ ions which are inhibitory to the electrodialysis treatment or the electric deionization treatment is reduced to a sufficiently low level relative to the nitrogen compound. As a result, the nitrogen compound can be efficiently removed with an electrodeionizer or an electrodialyzer in the subsequent step. Further, the neutralization dialysis removes not only H⁺ ions but also Cl⁻ ions through demineralization, resulting in a solution having a small total amount of dissolved ions. Thus, the concentration treatment in the subsequent stage can be facilitated.

If a nitrogen compound-containing acidic liquid is neutralized by directly adding an alkali, the number of alkali metal ions such as Na⁺ is increased with the result that Na⁺ represents a larger proportion of the migration of cation components so as to decrease the migration efficiency of the nitrogen compound in an electrodeionizer or an electrodialyzer in the subsequent step. Unlike such a neutralization method by directly adding an alkali to a nitrogen compound-containing acidic liquid, the neutralization dialysis treatment using an anion exchange membrane according to the present invention does not increase the total amount of ions in the neutralized liquid.

Because the liquid has been neutralized and demineralized beforehand, the nitrogen compound in the neutralized demineralized liquid can be concentrated even by distillation without causing problems such as the apparatus being corroded due to high acidity or high salt concentration of the concentrated liquid.

In the invention, it is preferable that the nitrogen compound in the neutralized demineralized liquid be concentrated using any of a distillation concentrator, an electrodeionizer and an electrodialyzer, more preferably an electrodeionizer or an electrodialyzer, and particularly preferably an electrodeionizer in terms of concentration efficiency (the second and sixth embodiments).

When the nitrogen compound in the neutralized demineralized liquid is concentrated using an electrodeionizer or an electrodialyzer, it is preferable that anode water which is water or an aqueous solution containing no oxidative substances or no substances that can become oxidative by being anodically oxidized be passed through an anode chamber of the electrodeionizer or the electrodialyzer (the third and seventh embodiments). When the liquid is concentrated using an electrodeionizer or an electrodialyzer, the ions to be removed are not only cation components but also anion components. That is, Cl⁻ ions migrate so as to enter a concentration chamber. When Cl⁻ is brought into contact with an anode, the ion is anodically oxidized into oxidative hypochlorous acid which can degrade ion exchange resins and ion exchange membranes. The effect caused by Cl⁻ is small when its concentration is low. However, even the neutralized demineralized liquid obtained by the neutralization and demineralization treatment has as high a Cl⁻ concentration as 10 to 20 g/L. Thus, for example, when a concentrated liquid discharged from a concentration chamber is mixed together with anode water flowing out from an anode chamber and the mixture is circulated into the anode chamber, Cl⁻ that has been concentrated in the concentration chamber is anodically oxidized in the anode chamber so as to form hypochlorous acid which accelerates the degradation of ion exchange resins and ion exchange membranes, thereby decreasing the life of the apparatus. Similarly, cathode water and a concentrated liquid are mixed with each other and the mixture is circulated. Because the concentrated liquid contains Cl⁻, circulating the concentrated liquid in the form of a mixture with anode water results in the formation of hypochlorous acid from the cathode water and the Cl⁻ in the concentrated liquid.

It is therefore preferable that the anode chamber be separated from an adjacent demineralizing dilution chamber or concentration chamber through a cation exchange membrane (or a bipolar membrane) and further that when the anode water is circulated, the anode water be circulated within the anode chamber alone without being mixed together with the concentrated liquid or an effluent discharged from any other chamber in order to prevent oxidative substances or any substances such as Cl⁻ ions that become oxidative by being anodically oxidized from flowing into the anode chamber.

In the present invention, the nitrogen compound-containing acidic liquid is preferably neutralized and demineralized until the pH of the resultant neutralized demineralized liquid becomes about 5 to 9. By carrying out the neutralization and demineralization treatment until such a pH value is reached, substances that are inhibitory to the subsequent nitrogen compound concentration step can be sufficiently removed from the neutralized demineralized liquid (the fourth and eighth embodiments).

In particular, the present invention is effective in treating a condemi regeneration waste liquid that is discharged from a condensate demineralization step performed in nuclear power generation or thermal power generation. According to the present invention, it is possible to efficiently concentrate and remove MEA and NH₄⁺ component of anticorrosive origin present in a condensate that is contained in a condemi regeneration waste liquid such as a monoethanolamine-containing dilute hydrochloric acid waste liquid, without causing problems such as corrosion due to concentrating of acid components and salt components contained in the waste liquid.

### Brief Description of Drawings

Fig. 1 is a diagram showing an embodiment of an apparatus for treating a nitrogen compound-containing acidic liquid according to the present invention.
Fig. 2 is a schematic sectional view illustrating a general configuration of an example of electrodeionizer that is a preferred nitrogen compound concentrator in the invention.
Fig. 3 is a schematic sectional view illustrating a general configuration of another example of electrodeionizer that is a preferred nitrogen compound concentrator in the invention.
Fig. 4 is a diagram showing a configuration of an electrodeionizer used in COMPARATIVE EXAMPLE 1.
Fig. 5 is a diagram showing a configuration of a neutralization dialysis device used in EXAMPLE 1.
Fig. 6 is a process chart for an anion exchange treatment performed in COMPARATIVE EXAMPLE 2.

### Description of Embodiments

Hereinbelow, embodiments of apparatuses and methods for treating a nitrogen compound-containing acidic liquid according to the present invention will be described in detail with reference to the drawings.

In this specification, the present invention will be described with respect to embodiments in which the nitrogen compound-containing acidic liquid treated according to the invention contains hydrochloric acid (HCl) as the acid and such a nitrogen compound-containing acidic liquid is neutralized and demineralized using an alkaline solution that is an aqueous sodium hydroxide solution. However, the acid that is contained in the nitrogen compound-containing acidic liquid treated in the invention is not limited to hydrochloric acid and may be another kind of acid such as sulfuric acid. In the case where the nitrogen compound-containing acidic liquid contains another kind of acid such as sulfuric acid, the Cl⁻ ion in the following description is replaced by the counter anion to H⁺ of that acid, for example SO₄²⁻. Further, in the case where another kind of alkaline solution other than an aqueous sodium hydroxide solution is used, the Na⁺ ion in the following description is replaced by the counter cation to OH⁻ of that alkali, for example K⁺.

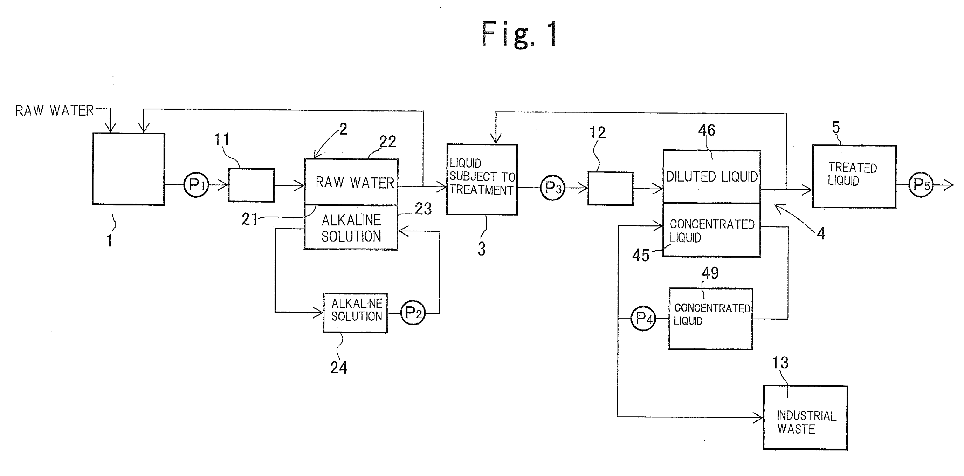

Fig. 1 is a diagram showing an embodiment of an apparatus for treating a nitrogen compound-containing acidic liquid according to the present invention. This apparatus mainly includes a raw water tank 1, a neutralization dialysis device 2, a treatment subject liquid circulation tank 3 serving also as a relay tank for an electrodeionizer 4, the electrodeionizer 4 and a treatment water tank 5.

### [Nitrogen compound-containing acidic liquid]

The nitrogen compound-containing acidic liquid that is to be treated in the present invention is not particularly limited. An example is a waste liquid that results from the regeneration of a cation exchange resin used in a condensate demineralizer (a condemi) for a condensate to which organic amine compounds such as monoethanolamine (MEA) and morpholine serving as anticorrosives have been added (hereinafter, such a waste liquid will be sometimes referred to as "condemi regeneration acidic waste liquid"). For example, such a waste liquid is generated in thermal power plants and pressurized water nuclear power plants.

Acids such as hydrochloric acid and sulfuric acid are used in the regeneration of cation exchange resins. Thus, a condemi regeneration acidic waste liquid contains detached organic amines (more accurately, acid salts of organic amines) and acids such as hydrochloric acid and sulfuric acid used as regeneration chemicals, as well as trace amounts of copper ions, iron ions and organic amine decomposition products such as ammonia.

The organic amine concentration, the concentrations of other water quality components, and the pH of such a condemi regeneration acidic waste liquid vary with the kind of waste liquid. An exemplary water quality is described below.

**[Table 1]**

| ***Typical values are in parentheses.** | | |
|---|---|---|
| Concentration (mg/L)* | SS | 0~100 (<10) |
| | TOC | 1000~15000 (4,880) |
| | CI⁻ | 30000~90000 (57,000) |
| | NH₃-N | 100~5500 (4,570) |
| | T-N | 200~10000 (8,100) |
| | Na | 0~20 (0.8) |
| | Cu | 0~20 (11.8) |
| | Fe | 0~20 (0.8) |
| | N₂H₄ | 100~1000 (750) |
| | MEA | 1000~4000 (15,900) |
| * pH | | <0.1 |

### [Neutralization and demineralization treatment]

In the present invention, first, a nitrogen compound-containing acidic liquid (hereinafter, sometimes referred to as "raw water") is passed through a first chamber that is partitioned from a second chamber through an anion exchange membrane, and an alkaline solution is passed through the second chamber, thereby neutralizing and demineralizing the raw water.

In order to carry out this neutralization and demineralization treatment for the raw water, a neutralization dialysis device (a diffusion dialysis device) 2 having an anion exchange membrane is preferably used.

In an embodiment illustrated in Fig. 1, a neutralization dialysis device (a diffusion dialysis device) 2 is used for the neutralization and demineralization treatment for raw water. The raw water in a raw water tank 1 is delivered by a pump P₁ through a prefilter 11, thereby removing fine particulate components, into a raw water chamber 22 of the neutralization dialysis device 2 in which an anion exchange membrane 21 partitions the internal space into the raw water chamber 22 and an alkaline solution chamber 23. Here, the prefilter 11 is optional. On the other hand, an alkaline solution is fed from an alkaline solution storage tank 24 to the alkaline solution chamber 23 by a pump P₂.

This alkaline solution may be an aqueous solution of a soluble alkali compound such as sodium hydroxide (NaOH), potassium hydroxide, lithium hydroxide or sodium carbonate.

In general, a cation exchange resin is used in a condemi in a higher proportion than an anion exchange resin. Thus, the amount of a waste liquid from the regeneration of an anion exchange resin which contains NaOH (hereinafter, sometimes referred to as "condemi regeneration alkaline waste liquid) is in excess of the amount of an acidic waste liquid resulting from the regeneration of a cation exchange resin.

In order to separate a mixed-bed resin into an anion exchange resin and a cation exchange resin, a technique is used at some worksites in which a 16 wt% aqueous NaOH solution is used to separate these resins utilizing the differences in specific gravities of the anion exchange resin, the 16 wt% aqueous NaOH solution and the cation exchange resin. In such worksites, a waste liquid which contains the alkali used in this separation is discharged.

As described above, alkaline waste liquids are discharged in excess at condemi regeneration worksites. Such an alkaline waste liquid as a condemi regeneration alkaline waste liquid may be used as the alkaline solution in the present invention.

Further, an alkaline waste liquid discharged from other types of facilities may be used as the alkaline solution in the invention.

In the neutralization dialysis device 2, the Cl⁻ ions in the raw water introduced into the raw water chamber 22 migrate to the alkaline solution chamber 23 through the anion exchange membrane 21, thereby demineralizing the raw water. On the other hand, the OH⁻ ions in the alkaline solution chamber 23 migrate to the raw water chamber 22 through the anion exchange membrane 21, thereby neutralizing the raw water. The effluent discharged from the raw water chamber 22 is returned to the raw water tank 1, and the raw water is circulated in the treatment. On the other hand, the effluent discharged from the alkaline solution chamber 23 is circulated by being returned to the alkaline solution storage tank 24.

Preferably, the following embodiments may be adopted in carrying out the neutralization and demineralization treatment using the neutralization dialysis device 2.

i) A membrane excellent in terms of acid resistance and alkali resistance is used as the anion exchange membrane 21. Further, the wetted surface of the neutralization dialysis device 2 is preferably composed of a material having excellent corrosion resistance. For example, the wetted surface is preferably lined with a fluororesin such as polytetrafluoroethylene.

ii) In order to increase the penetration migration speed of Cl⁻ ions and OH⁻ ions, it is preferable to increase the membrane surface velocity, thereby reducing the concentration polarization near the surface of the anion exchange membrane. That is, it is preferable that the membrane surface velocity on the raw water chamber 22 side and that on the alkaline solution chamber 23 side be each not less than 0.1 cm/sec, for example 1 to 8 cm/sec. If the membrane surface velocity is low, the Cl⁻ ions and the OH⁻ ions cannot migrate at a high speed, thus requiring a long time until a desired neutralized demineralized liquid is obtained. In terms of apparatus configuration, however, it is not viable to increase the membrane surface velocity to an excessively high speed. In order to achieve the above membrane surface velocity, the raw water pump P₁ and the alkaline solution pump P₂ are preferably diaphragm pumps or the like capable of delivering a liquid at high speed.

iii) The alkaline solution preferably has a higher alkali concentration than the acid concentration of the raw water. It is preferable to use an alkaline solution having an alkali concentration in terms of normality (N) that is not less than the acid concentration of the raw water, and particularly preferably about 2 to 4 times the acid concentration of the raw water. Provided that the HCl concentration of the raw water is 1.2 N, the alkaline solution that is used is preferably an aqueous NaOH solution having a normality of about 1.2 to 4.8 N, particularly preferably about 2 N. If the alkaline solution has a low alkali concentration, efficient neutralization is not feasible. In view of properties such as handling, the concentration of the alkaline solution is preferably not more than the above-described concentration.

Accordingly, in the case where the alkaline solution is a waste liquid such as the aforementioned condemi regeneration alkaline waste liquid, it is preferable to adjust the pH as required by adding an alkali such as NaOH.

iv) Preferably, the neutralization and demineralization treatment is terminated when the pH of the resultant neutralized demineralized liquid (the effluent discharged from the raw water chamber 22) becomes neutral, for example about 5 to 9, and such a neutralized demineralized liquid is subjected to the subsequent concentration treatment.

Any pH value of the neutralized demineralized liquid that is less than 3 indicates that the neutralization and demineralization treatment is insufficient. Thus, it is impossible to fully obtain the advantageous effects of the invention that are achieved by performing the neutralization and demineralization treatment prior to the concentration treatment. Increasing the pH of the neutralized demineralized liquid to an excessively high value results in inefficiency because an increased amount of Na⁺ ions will migrate from the alkaline solution chamber 23 into the raw water chamber 22 through the anion exchange membrane 21 (as will be described later, a small number of cation components can penetrate the anion exchange membrane), thus leading to an increase in the total number of ions to be treated in the subsequent concentration step.

For the purpose of pH control, a flow-through pH meter may be fitted to a pipe through which the effluent is discharged from the raw water chamber 22 of the neutralization dialysis device 2 in order to monitor the pH of the effluent discharged from the raw water chamber 22. With this configuration, the liquid delivery may be switched when the pH reaches a predetermined value such that the effluent discharged from the raw water chamber 22 is delivered not to the raw water tank 1 but to the treatment subject liquid circulation tank 3 for the electrodeionizer 4.

It is a known fact that even cation components can penetrate the anion exchange membrane 21. That is, cation components (such as Na⁺ ions originating from NaOH) migrate from the alkaline solution chamber 23 into the raw water chamber 22, and cation components originating from the nitrogen compound migrate from the raw water chamber 22 into the alkaline solution chamber 23 during the neutralization and demineralization treatment.

Accordingly, the alkaline solution that has been used in the neutralization and demineralization treatment for the raw water (hereinafter, sometimes referred to as "alkaline waste liquid") is a weak alkaline liquid which contains Cl⁻ ions dialyzed from the raw water and has a lowered pH as a result of the neutralization of the raw water (the dialysis of OH⁻ ions to the raw water chamber), and also contains a small amount of the nitrogen compound dialyzed from the raw water chamber 22 through the anion exchange membrane 21. Because the concentration of such a nitrogen compound is low, this alkaline waste liquid may be neutralized with an acid and released after the nitrogen compound is decomposed with, for example, a catalytic oxidizer.

In the neutralization dialysis device 2, the raw water and the alkaline solution may be passed through the raw water chamber 22 and the alkaline solution chamber 23, respectively, in such directions that these liquids flow concurrently or countercurrently. Countercurrent flows as shown in Fig. 1 are preferable in order to obtain a difference between the alkali consumption by the acidic liquid and the acid consumption by the alkaline solution and thereby to make sure that the water quality at the exit will be closer to neutrality.

The raw water and the alkaline solution may be passed through the respective chambers one time. However, it is generally preferable that these liquids be circulated as shown in Fig. 1, thereby achieving sufficient neutralization dialysis compared to a one-time passage system.

When the treatment is carried out continuously rather than batchwise, a preferable practice is to introduce the raw water into the raw water tank 1 while returning the neutralized demineralized liquid from the raw water chamber 22 of the neutralization dialysis device 2 to the raw water tank 1, and to collect a portion of the liquid contained in the raw water tank 1 and subject the portion to the subsequent concentration treatment.

Referring to Fig. 1, the neutralization dialysis device 2 has one raw water chamber 22 and one alkaline solution chamber 23 with one anion exchange membrane 21 interposed therebetween. However, the configuration of the neutralization dialysis device 2 is not limited thereto. For example, a plurality of raw water chambers and a plurality of alkaline solution chambers may be formed alternately through a plurality of anion exchange membranes, with an exemplary configuration being alkaline solution chamber/anion exchange membrane/raw water chamber/anion exchange membrane/alkaline solution chamber/anion exchange membrane/raw water chamber/anion exchange membrane/alkaline solution chamber.

According to the present invention, the raw water is neutralized and demineralized with the neutralization dialysis device having a configuration such as that described above so as to give a neutralized demineralized liquid which has been neutralized to a neutrality in the range of pH 5 to 9, for example pH 6 to 8 (about pH 7) and preferably demineralized to a Cl⁻ ion concentration that is 30 to 50% the Cl⁻ ion concentration of the raw water. When the nitrogen compound in the neutralized demineralized liquid is to be concentrated using an electrodeionizer or an electrodialyzer, the concentration of the nitrogen compound in the neutralized demineralized liquid is preferably not less than 1000 mg/L, and particularly preferably about 5000 to 20000 mg/L in order to ensure that the ion concentration in the liquid to be treated will be sufficient for a current to be passed.

### [Concentration treatment]

The liquid resulting from the neutralization and demineralization treatment of the raw water is subsequently subjected to a concentration treatment for the nitrogen compound in the liquid.

The concentration treatment may be carried out using a device such as a distillation concentrator, an electrodeionizer or an electrodialyzer. In particular, an electrodeionizer or an electrodialyzer may be preferably used, and an electrodeionizer may be particularly preferably used.

Electrodeionizers and electrodialyzers have an anode, a cathode, and a dilution chamber and concentration chambers defined between the anode and the cathode by ion permeable diaphragms. When a direct voltage is applied between the anode and the cathode, the neutralized demineralized liquid that has been introduced into the dilution chamber is exposed to an electric field and the organic amines and the ions originating from the nitrogen compounds such as NH₄⁺, as well as the ions originating from the acid and the alkali such as Na⁺ and Cl⁻ are caused to penetrate through the ion permeable diaphragms and are separated and recovered in the concentration chambers.

Fig. 1 illustrates an embodiment in which the nitrogen compound is concentrated using an electrodeionizer 4. The neutralized demineralized liquid discharged from the raw water chamber 22 of the neutralization dialysis device 2 is delivered to a treatment subject liquid circulation tank 3 connected to the electrodeionizer 4 and is further delivered by a pump P₃ through a prefilter 12, thereby removing fine particulate components, into the electrodeionizer 4. Here, the prefilter 12 is optional.

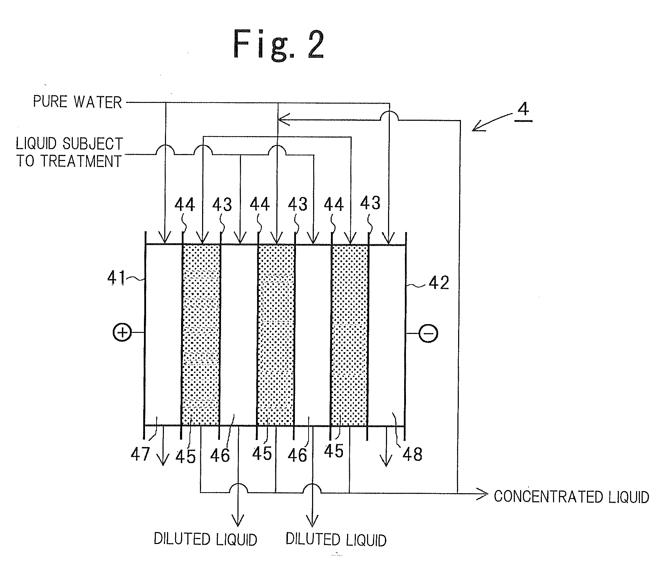

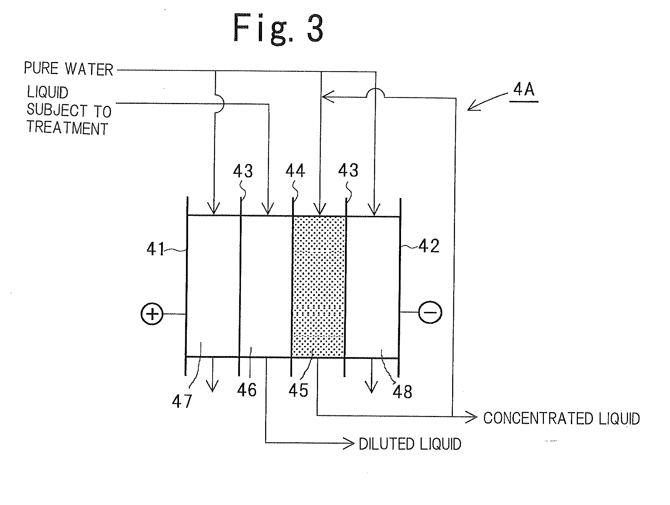

Figs. 2 and 3 are schematic sectional views illustrating general configurations of examples of an electrodeionizer that is a preferred nitrogen compound concentrator in the invention. In Figs. 2 and 3, members having the same function are assigned with an identical reference sign.

In an electrodeionizer 4 illustrated in Fig. 2, a plurality of anion exchange membranes (membranes A) 43 and a plurality of cation exchange membranes (membranes C) 44 are arranged alternately between electrodes (anode 41 and cathode 42) so as to define concentration chambers 45 and dilution chambers 46 alternately.

The dilution chambers 46 are filled with a cation exchange resin that is a cation exchanger, or with a mixture or respective layers of an anion exchange resin and a cation exchange resin that are anion and cation exchangers. The ion exchangers are not limited to ion exchange resins, and may be other ion exchangers such as ion exchange fibers or graft exchangers. The ratio (the volume ratio) of the anion exchanger to the cation exchanger packed in the dilution chamber 46 is preferably anion exchanger:cation exchanger = 95-0:5-100. The reason why the cation exchanger is used alone or the cation exchanger and the anion exchanger are used in combination is because an improvement in terms of removal efficiency may be obtained as long as the cation exchanger is present in the cell through which the liquid is passed in the dilution chamber 46.

Where necessary, an anion exchange resin and a cation exchange resin in the form of a mixture may be filled in the concentration chambers 45 as well as in an anode chamber 47 and a cathode chamber 48. In addition to the ion exchanger such as an ion exchange resin, an electric conductor such as activated carbon or a metal may be filled in the concentration chambers 45, the anode chamber 47 and the cathode chamber 48. The electric conductor is not particularly limited as long as the electric conductor can lower the electrical resistance of the liquid to be treated or the diluted liquid in order to stabilize the electrical resistance values in the concentration chambers, the anode chamber and the cathode chamber, and as long as the electric conductor does not increase the pressure of liquid passing through the cell. However, any material that is apt to be oxidized or reduced by being in direct contact with the electrode is not suitable.

No anion exchange resin is packed in the anode chamber 47. If there is a need for this chamber to be filled, only a cation exchange resin is packed therein because anion exchange resins are easily degraded by oxidation.

The neutralized demineralized liquid to be treated in the electrodeionizer 4 is introduced into the dilution chambers 46, and pure water is introduced into the concentration chambers 45, the anode chamber 47 and the cathode chamber 48. While the liquid subject to treatment is passed through the dilution chambers 46, the cation components in the liquid such as organic amines, NH₄⁺ ions and Na⁺ ions penetrate the cation exchange membrane (the membrane C) 44 so as to migrate into the concentration chamber 45, thereby concentrating the cation components in the concentration chamber 45. In a similar manner, the anion components such as Cl⁻ ions penetrate the anion exchange membrane (the membrane A) 43 so as to migrate into the concentration chamber 45 and are concentrated in the concentration chamber 45.

In order to increase the concentration percentage, a portion of the concentrated liquid discharged from the concentration chambers 45 is led to a concentrated liquid circulation tank 49 and is delivered by a pump P₄ to the inlets of the concentration chambers 45, thereby being circulated. The remaining portion is stored in an industrial waste storage tank (an industrial waste receiver tank) 13. Thus, pure water as make-up water is introduced into the concentration chambers 45 in an amount corresponding to the amount of the concentrated liquid discharged out of the system.

Of the concentrated liquid discharged from the concentration chambers 45, the amount of the liquid circulated back to the inlets of the concentration chambers 45 may be determined appropriately in accordance with the target degree of concentration or treatment efficiency. However, it is usually preferable that about 1 to 20% of the entirety of the concentrated liquid discharged from the concentration chambers 45 be circulated.

The diluted liquid discharged from the dilution chambers 46 is the residue of the liquid subject to treatment, namely, the neutralized demineralized liquid from which the cation components and the anion components have been separated and removed. This diluted liquid is delivered to a treatment water tank 5, is discharged by a pump P₅ and, where necessary, is subjected to a discharge treatment such as catalytic decomposition. The diluted liquid may be used as electrode water that is introduced into the electrodeionizer (or the electrodialyzer) and/or pure water that is introduced into the concentration chambers. Further, the diluted liquid may also be used as pure water in order to prepare the alkaline solution introduced into the neutralization dialysis device 2.

With regard to the treatment for the water discharged from the anode chamber 47 and the cathode chamber 48, the anode water and the cathode water may be mixed with each other and the mixture may be appropriately treated as required and may be released out of the system or may be reused as electrode water. For the reason described below, however, it is preferable that when the electrode water is circulated and reused, the anode water and the cathode water be not mixed with each other and the anode water alone be circulated in order to avoid contamination of the anode chamber 47 with Cl⁻ ions. In this case, the anode water may be pure water or may be an alkaline solution such as an about 0.1 to 1 N aqueous NaOH solution.

In an electrodeionizer or an electrodialyzer, the ions to be removed are not only cation components but also anion components. That is, Cl⁻ ions migrate so as to enter a concentration chamber. When the Cl⁻ ion is brought into contact with an anode, the ion is anodically oxidized into oxidative hypochlorous acid which can degrade ion exchange resins and ion exchange membranes. The effect caused by Cl⁻ is small when its concentration in a neutralized demineralized liquid is low. However, even the neutralized demineralized liquid obtained by the neutralization and demineralization treatment in the invention still has as high a Cl⁻ concentration as 10 to 20 g/L. Thus, the anode chamber 47 and the adjacent concentration chamber 45 or dilution chamber 46 are preferably separated from each other through a cation exchange membrane (or a bipolar membrane) in order to prevent oxidative substances or any substances that become oxidative by being anodically oxidized from entering the anode chamber 47. Similarly, it is preferable that the anode water be free of such substances, and further that pure water or an alkaline solution which does not contain such substances be supplied to the anode chamber 47 and, when the anode water is circulated and reused, the anode water be circulated within the anode chamber alone.

The electrodeionizer illustrated in Fig. 2 is only an illustrative preferred concentrator in the invention, and the configuration of electrodeionizer for use in the invention is not limited to the illustrated configuration.

For example, the number and the arrangement of concentration chambers and dilution chambers are not particularly limited. A greater number of concentration chambers and dilution chambers than illustrated may be provided. Alternatively, as illustrated in Fig. 3, an electrodeionizer 4A may be used which has a single concentration chamber 45 and a single dilution chamber 46. Similarly to the electrodeionizer 4 illustrated in Fig. 2, this electrodeionizer 4A can apply an electric field to the neutralized demineralized liquid introduced into the dilution chamber 46 such that the cation components in the liquid such as organic amines, NH₄⁺ ions and Na⁺ ions penetrate a cation exchange membrane (a membrane C) 44 so as to migrate into the concentration chamber 45, thereby concentrating the cation components in the concentration chamber 45. In a similar manner, the anion components such as Cl⁻ ions penetrate an anion exchange membrane (a membrane A) 43 so as to migrate into the concentration chamber 45 and are concentrated in the concentration chamber 45.

Instead of the electrodeionizer, an electrodialyzer may be used for the concentration of the nitrogen compound which is configured similarly to the electrodeionizer except that no ion exchangers are packed in the chambers such as dilution chambers.

The electrodialyzer and the electrodeionizer perform concentration using a similar ion migration mechanism. For the reason described below, however, a higher efficiency may be obtained by using the electrodeionizer when the neutralized demineralized liquid has a low concentration of ions to be removed.

That is, when the electrodialyzer is used, a current density distribution occurs in the dilution chamber because the electrical conductivity is different between the liquid to be treated and the diluted liquid, causing a poor passage of current on the exit side where the resistance becomes higher. Such a current density distribution may be effectively reduced by packing an ion exchanger such as an ion exchange resin. Further, when the liquid subject to treatment has a low concentration of ions to be removed, a sufficient removal efficiency cannot be obtained by electrodialysis because the adsorption site for the ions to be removed is limited to the surface of an ion exchange membrane. In contrast, the electrodeionizer enables a highly efficient removal (dilution and concentration) because the ions to be removed can be adsorbed to a wide range of adsorption sites including not only the membrane surface but also the ion exchanger such as ion exchange resin packed in the dilution chamber.

Further, a distillation concentrator may be used as the nitrogen compound concentrator. In such a case, it is preferable that the neutralized demineralized liquid be concentrated to such an extent that any salt is precipitated.

When the nitrogen compound in the neutralized demineralized liquid is concentrated with the electrodeionizer or the electrodialyzer, the treatment may be discontinued when the concentration of the nitrogen compound in the neutralized demineralized liquid becomes 1000 mg/L or less and the neutralized demineralized liquid may be delivered to a catalytic decomposition device so as to decompose the nitrogen compound. The reason for carrying out this practice is because the efficiency of the electrodeionizer or the electrodialyzer is lowered after the concentration of the nitrogen compound in the neutralized demineralized liquid supplied into the dilution chamber of the electrodeionizer or the electrodialyzer becomes low.

The nitrogen compound concentrated liquid (the concentrated liquid discharged from the concentration chamber of the electrodeionizer or the electrodialyzer) obtained by concentrating the nitrogen compound from the neutralized demineralized liquid may be treated by a method such as thermal decomposition or submerged combustion. Prior to such a treatment, the concentrated liquid may be further concentrated as required in order to increase the concentration of the nitrogen compound. The concentration means used in this case is not particularly limited. However, the use of a distillation concentrator, in particular a reduced-pressure distillation concentrator is advantageous in terms of concentration efficiency.

The concentrated liquid may be concentrated to an appropriate degree without limitation. However, it is preferable that the concentrated liquid which is to be subjected to thermal decomposition or submerged combustion be concentrated to such an extent that the concentration of the nitrogen compound becomes not less than 25% by weight, for example about 40 to 95% by weight. When the nitrogen compound is monoethanolamine, the upper limit of concentration is preferably 70% by weight in view of handling because the compound comes to have a flash point when its concentration exceeds 70% by weight.

The condensate water resulting from the distillation concentration of the neutralized demineralized liquid or the further distillation concentration of the concentrated liquid may be used as pure water that is introduced into the electrode chambers and/or the concentration chambers of the electrodeionizer or the electrodialyzer.

On the other hand, the diluted liquid obtained as a result of concentrating the neutralized demineralized liquid with the electrodeionizer or the electrodialyzer (the diluted liquid discharged from the dilution chambers of the electrodeionizer or the electrodialyzer) is the residue of the neutralized demineralized liquid from which the nitrogen compounds and other ion components have been separated and removed. This diluted liquid may be further treated by a method such as catalytic decomposition as required, and may be thereafter neutralized and released.

### EXAMPLES

The present invention will be described in greater detail by presenting EXAMPLES, COMPARATIVE EXAMPLES and REFERENCE EXAMPLES hereinbelow.

In examples described below, a condemi regeneration acidic waste liquid which had a water quality shown in Table 2 was used as raw water.

**[Table 2]**

| Concentration (mg/L) | | | | | | pH |
|---|---|---|---|---|---|---|
| SS | TOC | Cl⁻ | NH₃-N | T-N | MEA | |
| <10 | 4,820 | 54,000 | 2,210 | 8,100 | 13,000 | 0.1 |

In the following examples, the neutralization and demineralization treatment was carried out using a neutralization dialysis device by circulating the whole amounts of the raw water and an alkaline solution. However, the neutralization and demineralization treatment in the invention is not limited to such a circulatory treatment for the whole amounts of liquids. That is, the neutralization and demineralization treatment may be such that only a portion of the raw water and a portion of an alkaline solution are circulated, or such that the whole amounts of these liquids are passed one time.

The concentration treatment was carried out using an electrodeionizer by circulating the whole amounts of the diluted liquid and the concentrated liquid. However, the concentration treatment may be such that only a portion of each liquid is circulated, or such that the whole amounts of these liquids are passed one time. The same applies to electrode water.

### [COMPARATIVE EXAMPLE 1]

The condemi regeneration acidic waste liquid was directly treated with an electrodeionizer without being neutralized and demineralized.

The electrodeionizer used herein had a configuration shown in Fig. 3. The electrodeionizer (MX manufactured by Siemens) had anion exchange membranes 43 and a cation exchange membrane 44 as diaphragms which were arranged alternately. The area of each diaphragm was 0.75 dm². A dilution chamber 46, a concentration chamber 45, an anode chamber 47 and a cathode chamber 48 each had a volume of 60 mL.

The anion exchange membrane 43 was anion exchange membrane "NEOSEPTA AHA" manufactured by ASTOM Corporation, and the cation exchange membrane 44 was cation exchange membrane "NEOSEPTA CMB" manufactured by ASTOM Corporation.

The dilution chamber 46 and the concentration chamber 45 were each filled with an equivolume mixture of a cation exchange resin and an anion exchange resin. The anode chamber 47 and the cathode chamber 48 were filled with a cation exchange resin alone.

The cation exchange resin used herein was cation exchange resin "SK1B" manufactured by Mitsubishi Chemical Corporation, and the anion exchange resin was anion exchange resin "SA10A" manufactured by Mitsubishi Chemical Corporation.

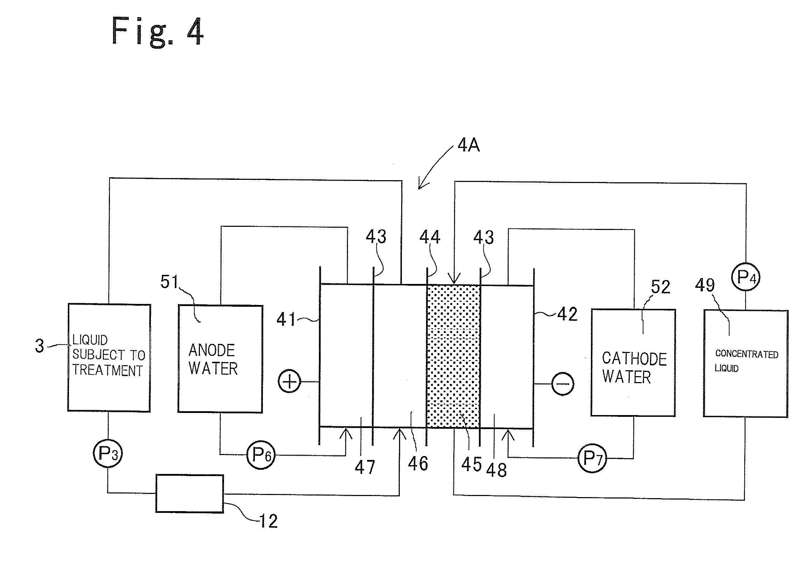

Fig. 4 is a diagram showing the flow system of the electrodeionizer used. Members that are the same as those in the electrodeionizers illustrated in Figs. 1 and 3 are assigned with an identical reference sign. As illustrated in Fig. 4, a concentrated liquid in a concentrated liquid circulation tank 49 was introduced into the concentration chamber 45 by a pump P₄ and was thereafter circulated to the concentrated liquid circulation tank 49. Separately, the condemi regeneration acidic waste liquid was supplied into a treatment subject liquid circulation tank 3 and was thereafter introduced into the dilution chamber 46 of the electrodeionizer by a pump P₃. The diluted liquid discharged from the dilution chamber 46 was circulated by being returned to the treatment subject liquid circulation tank 3. Anode water in the anode chamber 47 and cathode water in the cathode chamber 48 were similarly circulated between an anode water circulation tank 51 and the anode chamber 47 and between a cathode water circulation tank 52 and the cathode chamber 48 by a pump P₆ and a pump P₇, respectively. However, the concentrated liquid and the cathode water may be circulated in the form of a mixture with each other.

The condemi regeneration acidic waste liquid in a volume of 3 L was added into the treatment subject liquid circulation tank 3 and was passed through the dilution chamber 46 at a flow rate of 500 mL/hr. On the other hand, ultrapure water as the concentrated liquid was supplied into the concentrated liquid circulation tank 49 in a volume of 0.6 L, which was 1/5 of the volume, 3 L, of the liquid to be treated, and was circulated to the concentration chamber 45 at a flow rate of 100 mL/hr. A prefilter (a safety filter) 12 having a pore diameter of 10 µm was provided downstream the exit of the treatment subject liquid pump P₃, thereby removing fine particulate components from the liquid to be treated and preventing such particulate components from entering the dilution chamber 46.

Ultrapure water was circulated through the anode chamber 47 and the cathode chamber 48 each at a flow rate of 75 mL/hr.

The ultrapure water used as the concentrated liquid and the electrode water was ultrapure water which had been produced with a small-size continuous regeneration type ultrapure water production apparatus (KURITHENON (registered trademark) SH) manufactured by KURITA WATER INDUSTRIES LTD. and which had a specific resistivity of at least 15 MΩ·cm.
The electrodeionizer was energized with a direct current power supply (Compact Variable-Switching Power Supply PAK35-10A manufactured by KIKUSUI ELECTRONICS CORP.) in a constant current mode with 2.5 A (current density 3.3 A/dm²), thereby performing the treatment.

Under the conditions described above, the liquids were continuously circulated through the respective chambers and the MEA concentration in the diluted liquid in the treatment subject liquid circulation tank 3 was measured over time. The MEA concentration (mg/L) was multiplied by the volume of the liquid subject to treatment, namely 3 L, to give a MEA amount (mg). The reduction in the MEA amount between before and after the treatment was divided by the area of the cation exchange membrane and by the liquid passage time to give a MEA migration rate (g/hr/dm²).

Further, the amount of MEA that had migrated (g/hr) was divided by the area of the cation exchange membrane used in the experiment, namely 0.75 dm², and thereafter by the MEA molecular weight, namely 61.08 (g/mol), thereby determining the MEA molar migration amount (mol/hr/dm²). The amount of current used, namely 2.5 A (C/sec), was divided by the Faraday constant, namely 96485 (C/mol), and the MEA molar migration amount was divided by the quotient, namely 0.0932 (mol/hr), thereby determining the current efficiency in MEA migration.
The results are described in Table 3.

### [EXAMPLE 1]

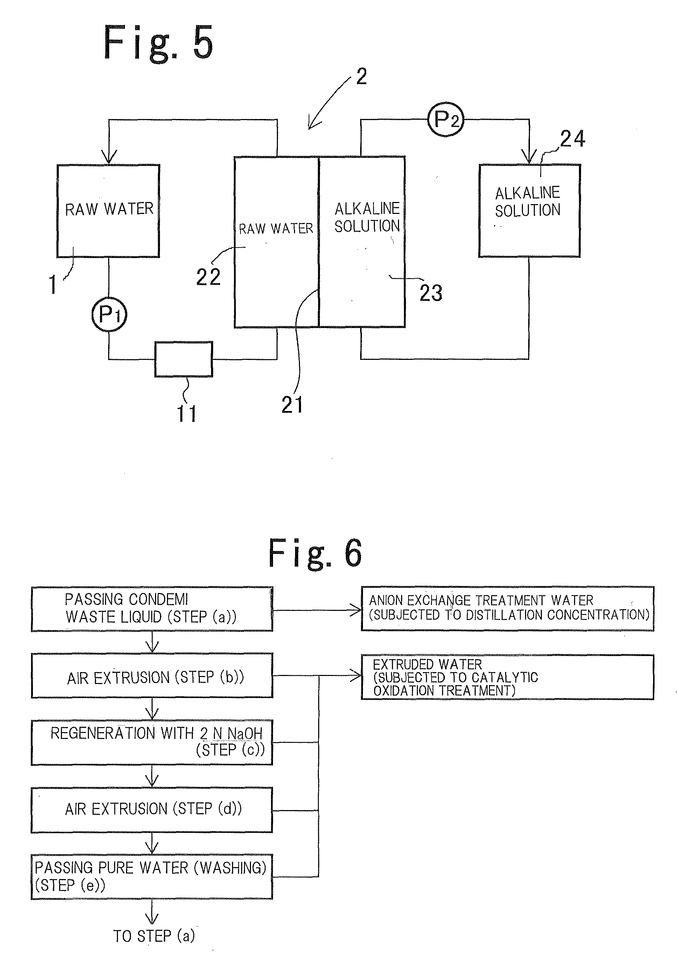

Treatments were carried out in the same manner as in COMPARATIVE EXAMPLE 1, except that the condemi regeneration acidic waste liquid was neutralized and demineralized by being passed through a neutralization dialysis device (manufactured by ASTOM Corporation) in which the wetted surface had been coated with polytetrafluoroethylene, and was thereafter treated with the electrodeionizer.
The systematic diagram of this neutralization dialysis device is illustrated in Fig. 5. In Fig. 5, members having the same function as the members shown in Fig. 1 are assigned with an identical reference sign.

This neutralization dialysis device was configured such that the liquid subject to treatment contained in a raw water tank 1 was delivered to a raw water camber 22 by a pump P₁ and was thereafter circulated to the raw water tank 1, while an alkaline solution in an alkaline solution storage tank 24 was circulated through an alkaline solution chamber 23.

The neutralization dialysis treatment was performed in the following manner.
An anion exchange membrane 21 was anion exchange membrane "NEOSEPTA AHA" manufactured by ASTOM Corporation which was excellent in acid resistance and alkali resistance.

The condemi regeneration acidic waste liquid in a volume of 5 L was supplied into the raw water tank 1 and was circulated through the raw water chamber 22. On the other hand, an equivalent volume to the liquid to be treated, namely 5 L, of an alkaline solution was provided which was a 2 N aqueous NaOH solution (in which the NaOH concentration was 7.3% by weight, and the normality was approximately 1.7 times the HCl molar concentration, namely 1.2 N, of the condemi regeneration acidic waste liquid). The alkaline solution was introduced into the alkaline solution chamber 23 of the neutralization dialysis device 2 and was circulated through the alkaline solution storage tank 24.

Diaphragm pumps were used as the raw water circulation pump P₁ and the alkaline solution circulation pump P₂. The liquids were passed such that the membrane surface velocity of the liquid in each of the raw water chamber 22 and the alkaline solution chamber 23 would be 1 cm/sec.

A prefilter (a safety filter) 11 having a pore diameter of 10 µm was provided downstream the exit of the raw water pump P₁, thereby removing fine particulate components from the raw water.

During the treatment, the pH of the liquid in the raw water tank 1 was measured. When the pH was lowered to 7.8, the circulation of the liquid was discontinued, and 5 L of the liquid in the raw water tank 1 was treated with the electrodeionizer in the same manner as in COMPARATIVE EXAMPLE 1. (However, the amount of the concentrated liquid was increased to 1 L in order to keep the proportion, 1/5, relative to the liquid to be treated.) The MEA migration rate and the current efficiency in MEA migration were determined in the similar manner. The results are described in Table 3.

The water quality of the raw water, namely the condemi regeneration acidic waste liquid, as well as the water qualities of the neutralized demineralized liquid and the alkaline solution resulting from the neutralization and demineralization treatment (the alkaline waste liquid) are described in Table 4.
Table 4 also describes the water quality of anion exchange treatment water in COMPARATIVE EXAMPLE 2 described later.

After the treatment was continuously carried out with the electrodeionizer for 17 hours, the MEA concentration in the diluted liquid which was contained in the treatment subject liquid circulation tank to the electrodeionizer as well as the MEA concentration in the concentrated liquid contained in the concentrated liquid circulation tank were measured. From these concentrations, the concentration ratio and the industrial waste reduction effect were examined. The results are described in Table 5.

Because slight amounts of nitrogen compounds would have migrated from the condemi regeneration acidic waste liquid toward the alkaline solution in the neutralization dialysis device, the alkaline waste liquid was decomposed with a cobalt catalyzed wet oxidation device (manufactured by KURITA WATER INDUSTRIES LTD.), neutralized and released.

### [EXAMPLE 2]

The treatments were carried out in the same manner as described in EXAMPLE 1, except that the electrodeionizer was energized at 4 A and the current density was 5.3 A/dm². The MEA migration rate and the current efficiency in MEA migration were determined in the similar manner. The results are described in Table 3.

**[Table 3]**

| | Current density in electrodeionizer (A/dm²) | MEA migration rate (g/hr/dm²) | Current efficiency in MEA migration (%) |
|---|---|---|---|
| COMP. EXAMPLE 1 (Electric deionization treatment without neutralization dialysis) | 3.3 | 0.19 | 2.3 |
| EXAMPLE 1 (Neutralization dialysis followed by electric deionization treatment) | 3.3 | 3.5 | 47 |
| EXAMPLE 2 (Neutralization dialysis followed by electric deionization treatment) | 5.3 | 4.4 | 36 |

**[Table 4]**

| | Condemi regeneration acidic waste liquid | EXAMPLE 1 | | Anion exchange treatment water in COMP. EX. 2 |
|---|---|---|---|---|
| | | Neutralized demineralized liquid | Alkaline solution | |
| pH | 0.1 | 7.8 | 13.2 | 7.4 |
| Electrical conductivity (mS/m) | — | 5370 | 12100 | 4300 |
| TOC (mg/L) | 4820 | 5940 | 1680 | 3050 |
| Cl⁻ (mg/L) | 54000 | 21300 | 30400 | 16400 |
| NH₃-N (mg/L) | 2210 | 2720 | 549 | 1200 |
| Na⁺ (mg/L) | — | 4560 | 29700 | — |
| EA (mg/L) | 13000 | 12500 | 3480 | 7752 |

**[Table 5]**

| | MEA concentration in diluted liquid (mg/L) | MEA concentration in concentrated liquid (mg/L) | Concentration ratio (times) | Industrial waste reduction effect (%) |
|---|---|---|---|---|
| After circulatory treatment for 17 hours | 800 | 72000 | 5.8 | 83 |

The results in Table 3 show the following.
In COMPARATIVE EXAMPLE 1, the condemi regeneration acidic waste liquid with a pH of not more than 0.1, namely, with an excessively high H⁺ concentration was treated directly with the electrodeionizer, thus resulting in a very low current efficiency in MEA migration.
In contrast, the waste liquid in EXAMPLES 1 and 2 was subjected to neutralization dialysis so as to remove Cl⁻ and neutralize the liquid. As a result, the MEA migration rate was high and a markedly high current efficiency was achieved.

From Table 4, the neutralization dialysis treatment reduced the Cl⁻ concentration to 40% the concentration before the treatment. Thus, it was demonstrated that demineralization was possible while performing neutralization.

While the MEA concentration in the neutralized demineralized liquid after the neutralization dialysis was 12500 mg/L, the MEA concentration in the diluted liquid in the electrodeionizer was lowered to 800 mg/L and the MEA concentration in the concentrated liquid was 72000 mg/L as shown in Table 5. In other words, the concentration ratio was 5.8 times. These results mean that an 83% reduction in the amount of industrial waste can be achieved compared to when the condemi regeneration acidic waste liquid is discharged as an industrial waste without being subjected to the above treatments. Thus, the present invention enables a marked reduction in treatment costs required in order to treat such an industrial waste by thermal decomposition or submerged combustion.

### [COMPARATIVE EXAMPLE 2]

The condemi regeneration acidic waste liquid was treated by anion exchange so as to remove Cl⁻.
The treatment flow chart is described in Fig. 6.

The condemi regeneration acidic waste liquid in a volume of 5 L was passed through a column filled with 5 L of an anion exchange resin, and the effluent was recovered as the anion exchange treatment water (step (a)). Thereafter, air extrusion was performed (step (b)), and the anion exchange resin was regenerated by passing 1 L of a 2 N aqueous NaOH solution (step (c)). Subsequently, air extrusion was carried out (step (d)) and pure water was passed (thereby washing the resin) (step (e)). The effluent in each of the steps (b) to (e) was recovered as the extruded water.

After one cycle from the step (a) to the step (e) was performed, the steps (a) to (e) were carried out again so as to collect the anion exchange treatment water and the extruded water. The anion exchange treatment water was subjected to distillation concentration, and the extruded water was catalytically oxidized.

Table 6 shows the water quality of the condemi regeneration acidic waste liquid used in this treatment, as well as the water qualities of the anion exchange treatment water and the effluent in the step (b).

**[Table 6]**

| | Condemi regeneration acidic waste liquid | Anion exchange treatment water | Effluent in step (b) |
|---|---|---|---|
| pH | 0.1 | 7.4 | 7.8 |
| TOC (mg/L) | 4820 | 3050 | 2900 |
| Cl⁻ (mg/L) | 54000 | 16400 | 15000 |
| NH₃-N (mg/L) | 2210 | 1200 | 1100 |
| MEA (mg/L) | 13000 | 7752 | 7600 |

The results in Table 6 show the following.
The leakage of Na⁺ which was a phenomenon specific to neutralization dialysis did not take place during the anion exchange treatment, and the Cl⁻ concentration was lowered from 54000 mg/L to 16400 mg/L. However, the pores in the surface of the anion exchange resin adsorbed MEA and NH₄⁺ in the form of an aqueous solution. Thus, the liquid which had been air extruded out of the resin was detected to contain such nitrogen compounds. That is, even the extruded water in the first step (b) had a MEA concentration of 7600 mg/L. Further, because MEA remained in the anion exchange resin, MEA was detected at 1500 mg/L in the 2 N NaOH regeneration solution and at 500 mg/L in the pure water used in washing. These results show that the later-stage catalytic oxidation treatment will involve a high load and cause economic disadvantages.

### [REFERENCE EXAMPLE 1]

The treatment with the electrodeionizer described in EXAMPLE 1 was continuously performed for 20 days. After the 20-day treatment, the voltage and the pressure loss in the anode chamber were examined. The increases relative to the initial values were determined. The results are described in Table 7.

### [REFERENCE EXAMPLE 2]

The treatment was carried out in the same manner as in REFERENCE EXAMPLE 1, except that the concentrated liquid containing Cl⁻ ions was introduced into the anode chamber and the mixture was circulated. After the 20-day treatment, the voltage and the pressure loss in the anode chamber were examined. The increases relative to the initial values were determined. The results are described in Table 7.
In REFERENCE EXAMPLE 2, hypochlorous acid was generated in the anode chamber and the ion exchange resins (in particular, the anion exchange resin) were degraded with the result that particles of the ion exchange resin that had been reduced in particle diameter were observed to flow into the concentrated liquid circulation tank.

**[Table 7]**

| | Initial value | REF. EXAMPLE 1 | REF. EXAMPLE 2 |
|---|---|---|---|
| Voltage (V) | 15 | 15.4 | 18 |
| Percentage of voltage relative to initial value (%) | — | 102 | 120 |
| Pressure loss in anode chamber (kPa) | 100 | 103 | 180 |

The results in Table 7 show the following.
In REFERENCE EXAMPLE 2, the surface of the ion exchange resin was oxidatively degraded and part of the resin was decomposed so as to fill the space in the anode chamber resulting in an increase in pressure loss in the anode chamber. Further, an increased voltage was caused probably due to the detachment of ion exchange groups from the resin.
On the other hand, REFERENCE EXAMPLE 1 adopted conditions which would prevent the formation of oxidative substances in the anode chamber. Thus, any degraded behaviors that occurred in REFERENCE EXAMPLE 2 were not observed.

Although the present invention has been described in detail with respect to some specific embodiments, the person skilled in the art will understand that various modifications are possible within the spirit and the scope of the present invention.
The present application is based on a Japanese patent application filed in the Japanese Patent Office on November 25, 2009 (Japanese Patent Application No. 2009-267692), the entire contents of which are incorporated herein by reference.

## Claims

1. An apparatus for treating a nitrogen compound-containing acidic liquid, comprising
a neutralization demineralization device which has a first chamber and a second chamber partitioned from each other with an anion exchange membrane and which is configured so as to neutralize and demineralize the acidic liquid by passing the acidic liquid through the first chamber and an alkaline solution through the second chamber, and
a concentrator which concentrates the nitrogen compound contained in the neutralized demineralized liquid that has been neutralized and demineralized by the neutralization demineralization device.

2. The apparatus for treating a nitrogen compound-containing acidic liquid according to Claim 1, wherein the concentrator is any of a distillation concentrator, an electrodeionizer and an electrodialyzer.

3. The apparatus for treating a nitrogen compound-containing acidic liquid according to Claim 2, wherein the concentrator is an electrodeionizer or an electrodialyzer, and anode water that is passed through an anode chamber of the electrodeionizer or the electrodialyzer does not contain an oxidative substance or any substance that becomes oxidative by being anodically oxidized.

4. The apparatus for treating a nitrogen compound-containing acidic liquid according to any one of Claims 1 to 3, wherein the pH of the neutralized demineralized liquid is 5 to 9.

5. The apparatus for treating a nitrogen compound-containing acidic liquid according to Claim 1, wherein the nitrogen compound is an organic amine compound.

6. A method for treating a nitrogen compound-containing acidic liquid, comprising
a neutralization and demineralization step of neutralizing and demineralizing the acidic liquid by passing the acidic liquid through a first chamber partitioned from a second chamber with an anion exchange membrane while passing an alkaline solution through the second chamber, and
a concentration step of concentrating the nitrogen compound contained in the neutralized demineralized liquid that has been neutralized and demineralized in the neutralization and demineralization step.

7. The method for treating a nitrogen compound-containing acidic liquid according to Claim 6, wherein the concentration step is carried out using any of a distillation concentrator, an electrodeionizer and an electrodialyzer.

8. The method for treating a nitrogen compound-containing acidic liquid according to Claim 7, wherein the concentration step is carried out using an electrodeionizer or an electrodialyzer, and anode water which does not contain an oxidative substance or any substance that becomes oxidative by being anodically oxidized is passed through an anode chamber of the electrodeionizer or the electrodialyzer.

9. The method for treating a nitrogen compound-containing acidic liquid according to any one of Claims 6 to 8, wherein the pH of the neutralized demineralized liquid is 5 to 9.

10. The method for treating a nitrogen compound-containing acidic liquid according to Claim 6, wherein the nitrogen compound is an organic amine compound.
